# EUROPEAN PATENT APPLICATION

(11) **EP 4 752 590 A1**
(43) Date of publication of application: **03.06.2026**
(21) Application number: 24216596.7
(22) Date of filing: 29.11.2024
(51) Int. Cl.: G01S 7/03, G02F 7/00, H04B 10/2575, H04B 10/50

(54) **RADAR SYSTEM**

(71) Applicant: Xavveo GmbH, 13355 Berlin (DE)
(72) Inventor: HOEHN, Christoph, 13156 Berlin (DE); MEISTER, Stefan, 12587 Berlin (DE); KEIL, Ulrich, 12245 Berlin (DE)
(74) Representative: Fischer, Uwe

(57) **Abstract**

An exemplary embodiment of the invention relates to a radar system comprising a radar transmission unit (200), a radar reception unit (300), and a central unit (100) which is optically connected to the radar transmission unit (200) and the radar reception unit (300), wherein at least one of said units comprises a signal separator (500) configured to separate a first signal from a second signal, said first and second signal being comprised in a respective optical carrier signal that said at least one unit receives, the signal separator (500) outputting the first signal at a first electrical output port (P1) and the second signal at a second electrical output port (P2), wherein the signal separator (500) comprises a photodetector (510) configured to receive the respective optical carrier signal and generate a photocurrent (Ip), and wherein the signal separator (500) is configured to extract both the first signal and the second signal from said same photocurrent (Ip) in the electrical domain.

## Description

The present application relates to radar systems, radar transmission units, radar reception units, central units of radar systems, sensor units, and signal separators for radar systems.

### Background of the invention

International patent application WO 2023/202878 A1 discloses a radar system that comprises a radar transmission unit, a radar reception unit, and a central unit. The central unit comprises a signal generator configured to provide a periodic electrical base signal, wherein the frequency of the periodic electrical base signal continuously increases or decreases. The central unit further comprises a modulator that modulates the electrical base signal onto an optical carrier signal and transmits the modulated optical carrier signal to the radar transmission unit via a first optical fiber. The radar transmission unit comprises an opto-electrical converter and a radar transmitter. The opto-electrical converter receives the modulated optical carrier signal, converts it into an electrical radar driver signal and forwards the electrical radar driver signal to the radar transmitter. The radar reception unit comprises a radar receiver, a mixer, a filter and an optical modulator. The mixer is electrically arranged between the radar receiver and the filter and mixes an electrical radar echo signal provided by the radar receiver with an electrical reference signal which is derived from an optical reference signal. The optical reference signal is optically received from the central unit via a second optical fiber. The filter filters the mixed signal and provides a filtered signal. The optical modulator modulates the filtered signal onto another optical carrier signal and transmits the modulated signal to the central unit via another optical fiber. The central unit further comprises a central opto-electrical converter and an evaluation unit. The opto-electrical converter converts the received signal into a corresponding electrical signal. The evaluation unit evaluates the corresponding electrical signal and derives a radar information therefrom.

### Objective of the present invention

In light of the above, an objective of the present invention is to propose radar systems and their components that offer enhanced operational capabilities.

### Brief summary of the invention

A first exemplary embodiment of the present invention relates to a radar system comprising a radar transmission unit, a radar reception unit, and a central unit which is optically connected to the radar transmission unit and the radar reception unit,
wherein at least one of said units comprises a signal separator configured to separate a first signal from a second signal, said first and second signal being comprised in a respective optical carrier signal that said at least one unit receives, the signal separator outputting the first signal at a first electrical output port and the second signal at a second electrical output port,
wherein the signal separator comprises a photodetector configured to receive the respective optical carrier signal and generate a photocurrent, and
wherein the signal separator is configured to extract both the first signal and the second signal from said same photocurrent in the electrical domain.

The signal separator(s) allows transmitting additional signals between the different units of the radar system and therefore provides enhanced operational capabilities. For instance, the central unit may transmit a control signal to control the functions of the radar transmission unit(s), in addition to a radar driver signal. Alternatively or additionally, the radar reception unit(s) may send data signals to the central unit, in addition to radar sensor signals.

The first signal preferably belongs to a first frequency band, while the second signal preferably belongs to a second frequency band. The first frequency band is preferably lower in frequency than the second frequency band.

Both frequency bands may be separated by a frequency gap.

In case of transmission from the central unit to the radar transmission unit or the radar reception unit, the first signal may be a control or clock signal, while the second signal may be a radar driver signal or a radar reference signal. The first signal may be in a first frequency band of 0 to 50 MHz, while the second signal may be in the GHz-band, for example, in the range of 19 GHz to 20.25 GHz.

The radar driver signal and the radar reference signal are preferably identical in shape over time. While their amplitudes may differ and a phase difference may exist, other features, such as the frequency dependency over time, are preferably the same.

In case of transmission from the radar reception unit to the central unit, the first signal may be a data signal, while the second signal may be a radar sensor signal. The first signal may be in a first frequency band of 0 to 10 MHz while the second signal may be in a higher MHz-band, for example, in the range of 10 MHz to 500 MHz.

The signal separator may comprise a transimpedance amplifier that is connected to the photodetector and configured to amplify an input current and provide an electrical output voltage. The electrical output voltage comprises the first signal in the first frequency band and the second signal in the second frequency band.

A voltage amplifier may be configured to amplify the first frequency band of the electrical output voltage and generate a control voltage. A voltage-controlled current source may generate a compensating current in response to the control voltage. The compensating current may be added (with a negative impact) to the photocurrent to generate the input current for the transimpedance amplifier, thereby cancelling out the first signal in the input current.

The control voltage may be forwarded to the first electrical output port of the signal separator, while the electrical output voltage of the transimpedance amplifier is forwarded to the second electrical output port of the signal separator.

The voltage amplifier preferably applies a higher amplification to the first frequency band than to the second frequency band.

For instance, the voltage amplifier may be configured to amplify the first frequency band of the electrical output voltage and exclude the second frequency band from amplification.

A filter may be arranged between the transimpedance amplifier and the voltage amplifier or integrated within the voltage amplifier.

The first frequency band of the electrical output voltage preferably passes through the filter towards the voltage amplifier, while the second frequency band of the electrical output voltage is preferably blocked.

The signal separator may comprise a comparator that converts the control voltage of the voltage amplifier into a binary output signal that is outputted at the first electrical output port of the signal separator.

The central unit may be configured to transmit a carrier signal, hereinafter referred to as first optical carrier signal, to the radar transmission unit. The first optical carrier signal may carry a first central signal and a radar driver signal. One of the signal separators of the radar system may be assigned to the radar transmission unit and configured to separate the first central signal from the radar driver signal. The latter separator may output the first central signal at its first electrical output port and the radar driver signal at its second electrical output port.

Alternatively or additionally, the central unit may be configured to transmit a carrier signal, hereinafter referred to as second optical carrier signal, to the radar reception unit. The second optical carrier signal may carry a second central signal and a radar reference signal. One of the signal separators may be assigned to the radar reception unit and configured to separate the second central signal from the radar reference signal. The signal separator may output the second central signal at its first electrical output port and the radar reference signal at its second electrical output port.

Alternatively or additionally, the radar reception unit may be configured to transmit a carrier signal, hereinafter referred to as third optical carrier signal, to the central unit. The third optical carrier signal may carry a data signal and a radar sensor signal. One of the signal separators may be assigned to the central reception unit and configured to separate the data signal from the radar sensor signal. The signal separator may output the data signal at its first electrical output port and the radar sensor signal at its second electrical output port.

The radar driver signal and/or the radar reference signal may be a periodic electrical signal. The frequency of the periodic electrical signal may continuously increase or decrease over time at least during an active segment of each periodic cycle. Each periodic cycle may further include a passive segment - during which the frequency of the radar driver signal and/or the radar reference signal is unvarying. The first central signal and/or the second central signal are preferably transmitted only during the passive segments of the cycles.

The first central signal may be a control signal, while the second central signal may be a clock signal. Alternatively, the first central signal may be the clock signal, while the second central signal may be the control signal. The data signal may be a status signal indicating the current status of the radar reception unit.

The central unit may transmit the first optical carrier signal to the radar transmission unit via an optical fiber which is referred to hereinafter as first optical fiber.

The central unit may transmit the second optical carrier signal to the radar reception unit via an optical fiber which is referred to hereinafter as second optical fiber.

The radar reception unit may transmit the third optical carrier signal to the central unit via an optical fiber which is referred to hereinafter as fourth optical fiber.

Another exemplary embodiment of the present invention relates to a signal separator for a radar system as described above wherein the signal separator is configured to separate a first signal in a first frequency band from a second signal in a second frequency band, said first and second signal being comprised in an optical carrier signal, wherein the signal separator comprises a photodetector configured to receive the respective optical carrier signal and generate a photocurrent, and wherein the signal separator is configured to extract both the first signal and the second signal from said same photocurrent in the electrical domain, and to output the first signal at a first electrical output port and the second signal at a second electrical output port.

Another exemplary embodiment of the present invention relates to a central unit comprising a signal separator as described above.

Another exemplary embodiment of the present invention relates to a radar transmission unit comprising a signal separator as described above.

Another exemplary embodiment of the present invention relates to a radar reception unit comprising a signal separator as described above.

Another exemplary embodiment of the present invention relates to a sensor unit comprising a radar transmission unit (preferably a single radar transmission unit), a radar reception unit (preferably a single radar reception unit) and at least one signal separator as described above.

The sensor unit may further comprise a control subunit. The control subunit is preferably an electronic circuit, for instance on CMOS basis. The control subunit may be a microprocessor. The control subunit preferably controls the operation of the radar transmission unit and the radar reception unit.

The radar transmission unit and the radar reception unit of the sensor unit are preferably integrated into the same electronic-photonic-integrated circuit (EPIC). The control subunit of the sensor module may also be integrated into said electronic-photonic-integrated circuit.

### Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which
- Figure 1: depicts an exemplary embodiment of a radar system according to the present invention,
- Figure 2: depicts an exemplary embodiment of a central unit for the radar system of Figure 1, in further detail,
- Figure 3: depicts an exemplary embodiment of a sensor unit according to the present invention, the sensor unit comprising an exemplary embodiment of a radar transmission unit and an exemplary embodiment of a radar reception unit,
- Figure 4: an exemplary embodiment of a radar driver signal and a radar reference signal, and
- Figure 5: an exemplary embodiment of signal separator according to the present invention.

### Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

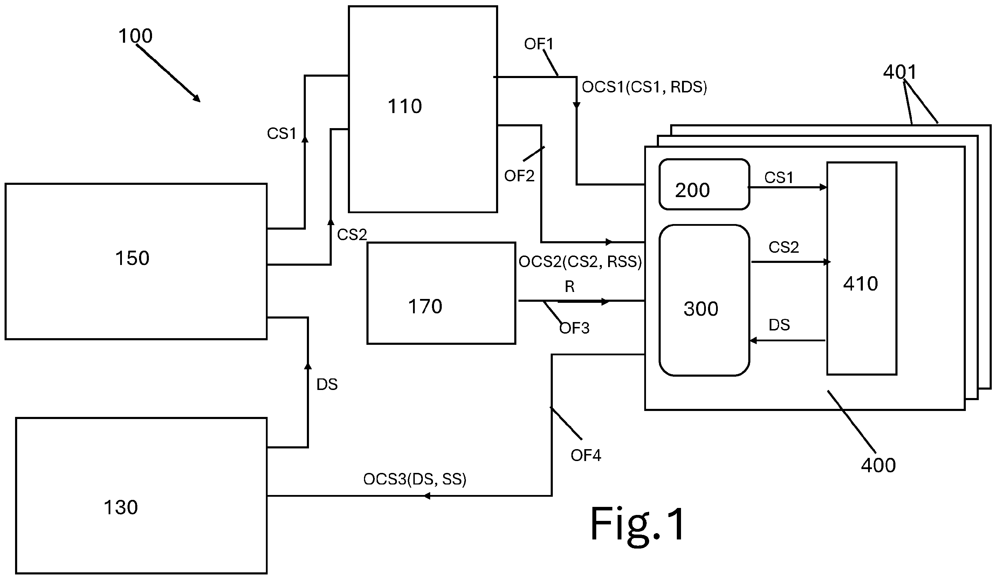

Figure 1 shows an exemplary embodiment of a radar system according to the present invention.

A central unit 100 of the radar system comprises a transmission subunit 110, a reception subunit 130, a control subunit 150 and a remote laser source 170. The control subunit 150 may be an electronic circuit, preferably on CMOS basis. The control subunit 150 may be a microprocessor.

The transmission subunit 110 of the central unit 100 is connected to a remote radar transmission unit 200 via a first optical fiber OF1. The first optical fiber OF1 transmits a first optical carrier signal OCS1 from the central unit 100 to the radar transmission unit 200. The first optical carrier signal OCS1 carries a first central signal CS1 and a radar driver signal RDS.

The first central signal CS1 preferably belongs to a first frequency band, while the radar driver signal RDS belongs to a second frequency band. The first frequency band is preferably lower in frequency than the second frequency band, and both frequency bands are ideally separated by a frequency gap. The first frequency band is preferably in the range of 0 to 100 MHz. The second frequency band is preferably in the GHz-range, for example, in the range of 19 GHz to 20.25 GHz.

A second optical fiber OF2 connects the transmission subunit 110 with a remote radar reception unit 300. The second optical fiber OF2 transmits a second optical carrier signal OCS2 from the central unit 100 to the radar reception unit 200. The second optical carrier signal OCS2 carries a second central signal CS2 and a radar reference signal RRS.

The second central signal CS2 preferably belongs to the above mentioned first frequency band of 0-100 MHz and the radar reference signal preferably belongs to the above mentioned second frequency band in the GHz-range.

The radar driver signal and the radar reference signal are preferably identical in shape over time. While their amplitudes may differ and a phase difference may exist, other features, such as the frequency dependency over time, are preferably the same.

The radar reception unit 300 is connected to the laser source 170 via a third optical fiber OF3, which supplies the radar reception unit 300 with optical radiation R. Additionally, it is connected to the reception subunit 130 of the central unit 100 via a fourth optical fiber OF4.

The fourth optical fiber OF4 transmits a third optical carrier signal OCS3 from the radar reception unit 300 to the reception subunit 130 of the central unit 100. The third optical carrier signal OCS3 may carry a data signal DS. The data signal DS may by a status signal indicating the current health or operating status of the radar reception unit 300 or further information such as a temperature information.

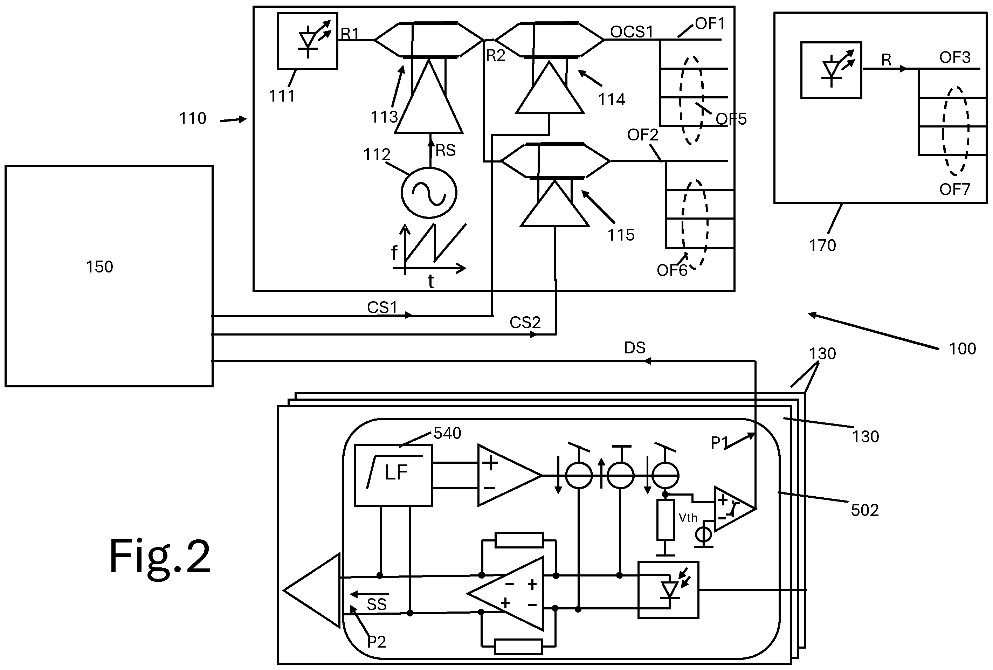

The radar system may comprise additional radar transmission units that are connected to the transmission subunit 110 via additional optical fibers OF5 (see Figure 2), and/or additional radar reception units that are connected to the central unit 100 via additional optical fibers OF6 (see Figure 2). In the latter case, the central unit 100 preferably comprises an individual reception subunit 130 for each of the radar reception units while all radar transmission units may be supplied with the optical carrier signals OCS1 and OCS2 by a single radar transmission subunit 110. Additional optical fibers OF7 may provide the radar reception units with radiation R from the remote laser source 170 (see Figure 2).

The transmission unit 200 and the reception unit 300 may be implemented in the same sensor module 400 as shown in Figure 1. Alternatively, the transmission unit 200 and the reception unit 300 may be implemented in separate modules.

The additional radar transmission units and the additional radar reception units may also be pairwise allocated to additional sensor modules 401.

Figure 2 shows an exemplary embodiment of the central unit 100 of Figure 1 in further detail.

The control subunit 150 is configured to generate the first central signal CS1 and the second central signal CS2. The control subunit 150 is further configured to receive the data signal DS from the reception subunit 130.

The first central signal CS1 may be a control signal. The control signal may include control data that regulate the functions of the remote radar transmission unit 200 and the functions of the additional remote transmission units. For this purpose, the first central signal CS1 may contain identifiers that designate the respective transmission unit intended to handle the corresponding control data. In the case of multiple radar transmission units, the control signal may specify which radar transmission units are instructed to emit radar radiation and which are directed to disable radar emission. Additionally, the control data may provide instructions concerning specific radiation power or other settings of the radar transmission units.

The second central signal CS2 may be a clock signal that enables the interpretation of the first central signal CS1 without requiring clock regeneration from the first central signal CS1.

Alternatively, the first central signal CS1 may be the clock signal while the second central signal CS2 may be the control signal.

The control subunit 150 forwards the first and second central signal CS1, CS2 to the transmission subunit 110.

The transmission subunit 110 comprises an internal optical emitter 111 such as a laser and/or a port where an optical signal generated by an external optical emitter can be coupled in. The optical emitter 111 preferably generates unmodulated laser radiation R1, i.e. radiation with a given constant radiation power.

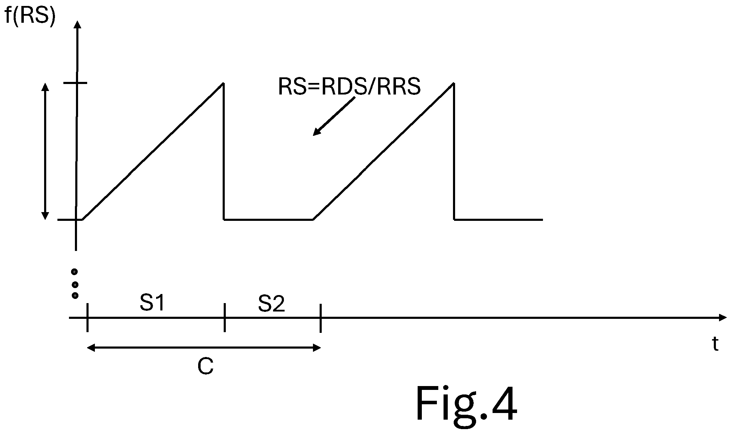

The transmission subunit 110 further comprises an electrical signal generator 112 which generates an electrical ramp signal RS that serves as a radar driver signal RDS and a radar reference signal RRS. The ramp signal RS may be a periodic signal as shown in Figure 4. The frequency f of the periodic electrical ramp signal RS continuously increases or decreases over time t at least during an active segment S1 of each periodic cycle C. Each periodic cycle C further includes a passive segment S2 during which the frequency of the ramp signal RS is stable. During the passive segments S2, the radar emission may be disabled.

The ramp signal RS controls a first amplitude modulator 113, which is connected to the internal optical emitter 111. In response, the first amplitude modulator 113 modulates the unmodulated laser radiation R1, incorporating the ramp signal RS into the optical radiation R1. This process results in the generation of modulated radiation R2.

The modulated radiation R2 is then further modulated by a second amplitude modulator 114, which is controlled by the first central signal CS1, thereby incorporating the first central signal CS1 into the optical radiation R. As a result, the second amplitude modulator 114 completes the formation of the first optical carrier signal OCS1. The first optical carrier signal OCS1 is then transmitted to the radar transmission unit 200 via the first optical fiber OF1, as well as to the additional radar transmission units through additional optical fibers OF5.

The modulated radiation R2 is also modulated by a third amplitude modulator 115, which is controlled by the second central signal CS2, thereby incorporating the second central signal CS2 into the optical radiation R2. As a result, the second amplitude modulator 115 completes the formation of the second optical carrier signal OCS2. This second optical carrier signal OCS2 is then transmitted to the radar reception unit 300 via the second optical fiber OF2, as well as to the additional radar reception units through additional optical fibers OF6.

The ramp signal RS, which is included in (or sort of added to) the first optical carrier signal OCS1, serves as a radar driver signal RDS for the radar transmission units 200. The same ramp signal RS, also included in the second optical carrier signal OCS2, serves as a radar reference signal RRS for the radar reception units 300.

In the exemplary embodiment of Figure 2, the modulation is carried out by three amplitude modulators 113-115. Alternatively, only two amplitude modulators may be used if the ramp signal RS and the first central signal CS1, as well as the ramp signal RS and the second central signal CS2, are electrically combined before modulation. In this case, a single first amplitude modulator can generate the first optical carrier signal OCS1 based on the combined ramp signal RS and the first central signal CS1, while a single second amplitude modulator can generate the second optical carrier signal OCS2 based on the combined ramp signal RS and the second central signal CS2.

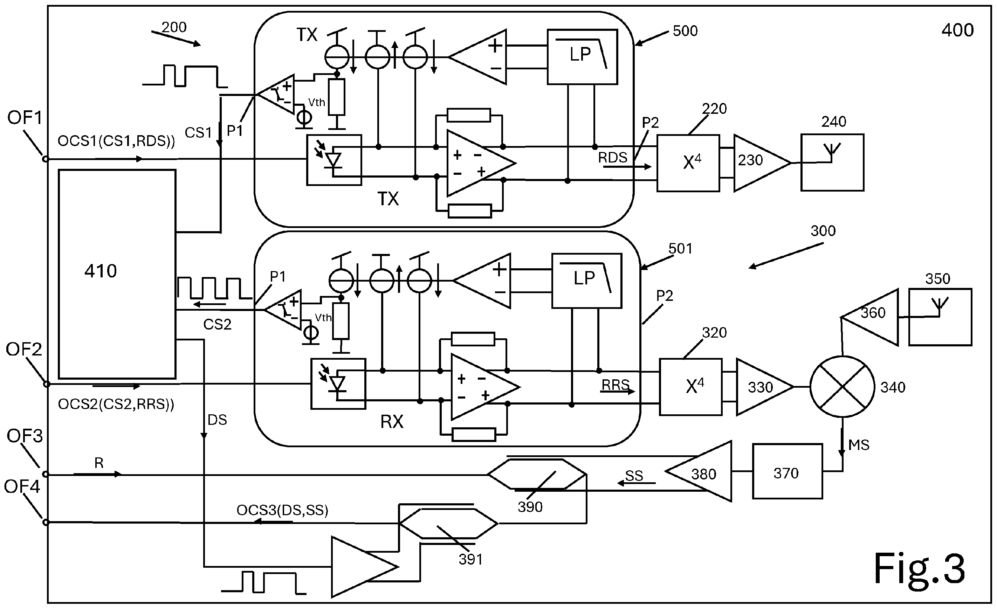

Figure 3 shows an exemplary embodiment of the radar transmission unit 200 and the radar reception unit 300 of Figure 1 in further detail.

The radar transmission unit 200 comprises a signal separator 500 that separates the first central signal CS1 from the radar driver signal RDS. The first central signal CS1 is outputted at a first electrical output port P1 of the signal separator 500 and the radar driver signal RDS is outputted at a second electrical output port P2 of the signal separator 500.

The radar driver signal RDS is sent to a frequency multiplier 220 and an amplifier 230. The frequency multiplier 220 increases the frequency of the radar driver signal RDS, for example by a factor of four, preferably generating a radar output signal in the frequency range of 76 to 81 GHz. The amplifier boosts the radar output signal and provides the radar output signal to an antenna 240.

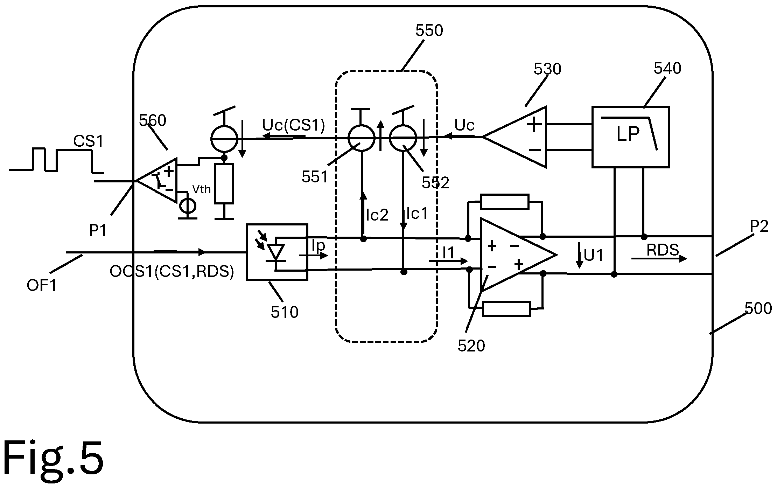

Figure 5 shows the signal separator 500 of Figure 3 in further detail.

The signal separator 500 of Figure 3 is configured to separate a first signal in a first frequency band from a second signal in a second frequency band. The first frequency band is preferably lower in frequency than the second frequency band. The first and second signal are transmitted via an optical carrier signal.

The following explanations assume, by way of example, that the first signal is the first central signal CS1 while the second signal is the radar driver signal RDS, both of which are conveyed by the first optical carrier signal OCS1.

The signal separator 500 comprises a photodetector 510 that receives the first optical carrier signal OCS1 and generates a photocurrent Ip. The signal separator 500 extracts both the first central signal CS1 and the radar driver signal RDS from said same photocurrent Ip in the electrical domain, and outputs the first central signal CS1 at its first electrical output port P1 and the radar driver signal RDS at its second electrical output port P2.

To this end, the signal separator 500 comprises a transimpedance amplifier 520 that is connected to the photodetector 510.

The transimpedance amplifier 520 amplifies an input current I1 and provides an electrical output voltage U1. The electrical output voltage U1 comprises the first central signal CS1 in the first frequency band and the radar driver signal RDS in the second frequency band.

A voltage amplifier 530 is connected to the output ports of the transimpedance amplifier 520 and amplifies the first frequency band of the electrical output voltage U1 in order to generate a control voltage Uc.

The second frequency band is preferably excluded from amplification. To avoid or minimize the amplification of the second frequency band, a filter 540 may be arranged between the transimpedance amplifier 520 and the voltage amplifier 530, or it may be integrated into the voltage amplifier 530. This filter 540 is preferably designed to allow the first frequency band of the electrical output voltage U1 to pass through while blocking the second frequency band of the electrical output voltage U1.

In response to the control voltage Uc, a voltage-controlled current source 550 generates a compensating current. The compensating current is added to the photocurrent Ip in order to generate the input current I1 for the transimpedance amplifier 520, thereby cancelling out the first central signal CS1 in the input current I1.

In the exemplary embodiment of Figure 5, the voltage-controlled current source may comprise a positive branch current source 551 and a negative branch current source 552, and the compensation current may comprise a positive branch current Ic1 and a negative branch current Ic2. The positive branch current source 551 may inject the positive branch current Ic1 into the minus-port of the transimpedance amplifier 520, and the negative branch current source 552 may inject the negative branch current IC2 into the plus-port of the transimpedance amplifier.

In other words, the voltage-controlled current source 500 provides a negative feed-back loop that intends to detect the first central signal CS1 at the output side of the transimpedance amplifier 520 (in the electrical output voltage U1) in order to eliminate this signal in the input current signal I1 at the input side of the transimpedance amplifier 520. The control voltage Uc necessary to achieve this result carries the information related to the first central signal CS1 and therefore also the first central signal CS1 itself.

The control voltage Uc is then forwarded to the first electrical output port P1 of the signal separator 500.

The signal separator 500 may further comprise a comparator 560 that converts the control voltage Uc of the voltage amplifier 530 into a binary output signal that is outputted at the first electrical output port P1 of the signal separator 500.

The radar driver signal RDS is in the second frequency band and therefore unaffected by the negative feedback loop. In consequence, the radar driver signal RDS can reach the second electrical output port P2 of the signal separator 500.

Referring again to Figure 3, the radar reception unit 300 comprises a signal separator 501 that separates the second central signal CS2 from the radar reference signal RRS. The second central signal CS2 is outputted at a first electrical output port P1 of the signal separator 501 and the radar reference signal RRS is outputted at a second electrical output port P2 of the signal separator 501.

The signal separator 500 of the radar transmission unit 200 and the signal separator 501 of the radar reception unit 300 may be identical. Therefore, the explanations provided above with reference to Figure 5 may also apply to the signal separator 501 of the radar reception unit 300.

The radar reference signal RRS is sent to a frequency multiplier 320 and an amplifier 330. The frequency multiplier 330 increases the frequency of the radar reference signal RDS, for example by a factor of four, preferably generating a signal in the frequency range of 79 to 81 GHz. The amplifier 330 boosts this signal and provides an amplified signal to a mixer 340. The mixer 340 mixes the amplified signal with a received radar signal provided by an antenna 350 and a low noise amplifier 360, generating a mixed signal MS. The mixed signal MS is then filtered by a filter 370 and amplified by an amplifier 380, thereby forming a radar sensor signal SS. The radar sensor signal SS is subsequently used to control a first amplitude modulator 390, which modulates the optical radiation R provided by the remote laser source 170 source via the third optical fiber OF3.

A small phase difference between the radar driver signal RDS at the input of the antenna 240 and the radar reference signal RRS at the input of the mixer 340 may be beneficial to achieve a minimal frequency for the mixed signal, even when detecting an object very close to the antennas 240 and 350. This small phase difference can be achieved for instance if the first optical fiber OF1 is slightly longer than the second optical fiber OF2.

The radar reception unit 300 further comprises a second amplitude modulator 391 which modulates the optical radiation R with a data signal DS. The data signal DS may be a status signal indicating the current status of the radar reception unit 300.

In the exemplary embodiment of Figure 3, the data signal DS is provided by a control subunit 410 of the sensor unit 400 that comprises the radar transmission unit 200 and the radar reception unit 300.

The control subunit 410 may also be connected to the first output port P1 of the signal separator 500 of the radar transmission unit 200 in order to evaluate the first central signal CS1 (e.g. control signal) and control the functions of the radar transmission unit 200 and those of the radar reception unit 300 accordingly.

The control subunit 410 of the sensor unit 400 may be an electronic circuit, preferably on CMOS basis. The control subunit 410 may be a microprocessor.

For instance, all components shown in Figure 3 may belong to the same sensor module 400. At least the radar transmission unit 200 and the radar reception unit 300 of the sensor unit 400 are preferably integrated into the same electronic-photonic-integrated circuit (EPIC). The control subunit 150 of the sensor module 400 is preferably also integrated into said electronic-photonic-integrated circuit.

Referring again to Figure 2, the central unit 100 may comprise a signal separator 502 that separates the data signal DS (e.g. status signal) that forms the first signal entered into the separator 502, from the radar sensor signal SS that forms the second signal entered into the separator 502. The data signal DS is outputted at a first electrical output port P1 of the signal separator 502 while the radar sensor signal SS is outputted at a second electrical output port P2 of the signal separator 502.

The signal separators 500, 501, and 502 may be identical. Therefore, the explanations provided above with reference to the signal separator 500 shown in Figure 5 may also apply to the signal separator 502 of the central unit 100.

The first signal (i.e. data signal DS) belongs to a first frequency band and the second signal (i.e. the radar sensor signal SS) belongs to second frequency band. The second frequency band is preferably higher in frequency than the first frequency band. The first frequency band is preferably in the range between 0 and 10 MHz while the second frequency band is preferably above 10 MHz and for instance in the range between 10 MHz and 200 MHz.

It is apparent that the gap between the first frequency band and the second frequency band is smaller in the signal separator 502 compared to the signal separators 500 and 501. Consequently, a filter 540 that helps exclude the radar sensor signal SS from being affected by the negative feedback loop appears beneficial.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

Furthermore, the terms 'first,' 'second,' 'third,' and so on are used to distinguish between items of the same kind. However, none of these terms imply a specific number of such items. These terms do not imply that all such entities items must be present. For example, the 'first' and 'fourth' items may be present even if the 'second' and 'third' are absent."

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one ore more) of the present dependent claims (regardless of the present claim structure). Therefore, the applicant may direct further patent claims towards other claim combinations at a later stage of the prosecution.

## Claims

1. A radar system comprising a radar transmission unit (200), a radar reception unit (300), and a central unit (100) which is optically connected to the radar transmission unit (200) and the radar reception unit (300),
wherein at least one of said units comprises a signal separator (500) configured to separate a first signal from a second signal, said first and second signal being comprised in a respective optical carrier signal that said at least one unit receives, the signal separator (500) outputting the first signal at a first electrical output port (P1) and the second signal at a second electrical output port (P2),
wherein the signal separator (500) comprises a photodetector (510) configured to receive the respective optical carrier signal and generate a photocurrent (Ip), and
wherein the signal separator (500) is configured to extract both the first signal and the second signal from said same photocurrent (Ip) in the electrical domain.

2. The radar system of claim 1
wherein the signal separator (500) comprises
a transimpedance amplifier (520) connected to the photodetector (510) and configured to amplify an input current (I1) and provide an electrical output voltage (U1), wherein the electrical output voltage (U1) comprises the first signal in a first frequency band and the second signal in a second frequency band,
a voltage amplifier (530) configured to amplify the first frequency band of the electrical output voltage (U1) and generate a control voltage (Uc),
a voltage-controlled current source (500) configured to generate a compensating current (Id, Ic2) in response to the control voltage (Uc), the compensating current being added to the photocurrent (Ip) to generate said input current (I1) for the transimpedance amplifier (520), thereby cancelling out the first signal in the input current (I1),
wherein the control voltage (Uc) is forwarded to the first electrical output port (P1) of the signal separator (500), and
wherein the electrical output voltage (U1) of the transimpedance amplifier (520) is forwarded to the second electrical output port (P2) of the signal separator (500).

3. The radar system of claim 2
wherein the voltage amplifier (530) applies a higher amplification to the first frequency band than to the second frequency band.

4. The radar system of any of the preceding claims
wherein the voltage amplifier (530) is configured to amplify the first frequency band of the electrical output voltage (U1) and exclude the second frequency band from amplification.

5. The radar system of any of the preceding claims
wherein a filter (540) is arranged between the transimpedance amplifier (520) and the voltage amplifier (530) or integrated within the voltage amplifier (530), and
wherein said first frequency band of the electrical output voltage (U1) passes through the filter (540) towards the voltage amplifier (530), while the second frequency band of the electrical output voltage (U1) is blocked.

6. The radar system of any of the preceding claims
wherein the signal separator (500) comprises a comparator (560) that converts the control voltage (Uc) of the voltage amplifier (530) into a binary output signal that is outputted at the first electrical output port (P1) of the signal separator (500).

7. The radar system of any of the preceding claims
wherein the central unit (100) is configured to transmit a first optical carrier signal to the radar transmission unit (200),
wherein said first optical carrier signal carries a first central signal and a radar driver signal,
wherein one of the signal separators (500) is assigned to the radar transmission unit (200) and configured to separate the first central signal from the radar driver signal, and
wherein the signal separator (500) outputs the first central signal at its first electrical output port (P1) and the radar driver signal at its second electrical output port (P2) .

8. The radar system of any of the preceding claims
wherein the central unit (100) is configured to transmit a second optical carrier signal to the radar reception unit (300),
wherein said second optical carrier signal carries a second central signal and a radar reference signal,
wherein one of the signal separators (500) is assigned to the radar reception unit (300) and configured to separate the second central signal from the radar reference signal, and
wherein the signal separator (500) outputs the second central signal at its first electrical output port (P1) and the radar reference signal at its second electrical output port (P2).

9. The radar system of any of the preceding claims 7-8
wherein the radar driver signal and/or the radar reference signal is a periodic electrical signal, the frequency of which continuously increases or decreases over time at least during an active segment (S1) of each periodic cycle,
wherein each periodic cycle (C) further includes a passive segment (S2) - during which the frequency of the radar driver signal and/or the radar reference signal is unvarying, and
wherein the first central signal and/or the second central signal is transmitted only during the passive segments of the cycles.

10. The radar system of any of the preceding claims
wherein the radar reception unit (300) is configured to transmit a third optical carrier signal to the central unit (100),
wherein said third optical carrier signal carries a data signal and a radar sensor signal,
wherein one of the signal separators (500) is assigned to the central reception unit and configured to separate the data signal from the radar sensor signal, and
wherein the signal separator (500) outputs the data signal at its first electrical output port (P1) and the radar sensor signal at its second electrical output port (P2).

11. A signal separator (500) for a radar system according to any of the preceding claims wherein the signal separator (500) is configured to separate a first signal in a first frequency band from a second signal in a second frequency band, said first and second signal being comprised in an optical carrier signal,
wherein the signal separator (500) comprises a photodetector (510) configured to receive the respective optical carrier signal and generate a photocurrent (Ip), and
wherein the signal separator (500) is configured to extract both the first signal and the second signal from said same photocurrent (Ip) in the electrical domain, and to output the first signal at a first electrical output port (P1) and the second signal at a second electrical output port (P2) .

12. A central unit (100) for a radar system according to any of the preceding claims wherein the central unit (100) comprises a signal separator (500) according to claim 11.

13. A radar transmission unit (200) for a radar system according to any of the preceding claims wherein the radar transmission unit (200) comprises a signal separator (500) according to claim 11.

14. A radar reception unit (300) for a radar system according to any of the preceding claims wherein the radar reception unit (300) comprises a signal separator (500) according to claim 11.

15. Sensor unit (400) having a radar transmission unit (200), a radar reception unit (300) and at least one signal separator (500) according to claim 11.
